# EUROPÄISCHE PATENTSCHRIFT

(11) **EP 2 002 316 B1**
(45) Veröffentlichungstag und Bekanntmachung des Hinweises auf die Patenterteilung: **02.12.2009**
(21) Anmeldenummer: 07726425.7
(22) Anmeldetag: 20.02.2007
(51) Int. Cl.: G05B 19/042, G05B 19/418

(54) **STEUEREINRICHTUNG MIT INTEGRIERTEM MASCHINENMODELL**
CONTROL DEVICE HAVING AN INTEGRATED MACHINE MODEL
DISPOSITIF DE COMMANDE A MODELE DE MACHINE INTEGRE

(30) Priorität: 31.03.2006 DE 102006015029
(43) Veröffentlichungstag der Anmeldung: 17.12.2008
(73) Patentinhaber: SIEMENS AKTIENGESELLSCHAFT, 80333 München (DE)
(72) Erfinder: HERTINGER, Klaus, 91056 Erlangen (DE); KIESEL, Martin, 91099 Poxdorf (DE)
(86) Internationale Anmeldenummer: PCT/EP2007/051604
(87) Internationale Veröffentlichungsnummer: WO 2007/113047

(56) Entgegenhaltungen:
- EP-A- 1 225 491
- EP-A2- 0 747 793
- DE-A1- 19 917 102

## Beschreibung

Die vorliegende Erfindung betrifft eine Steuereinrichtung, von der eine Produktionsmaschine entsprechend einem in der Steuereinrichtung hinterlegten Steuerprogramm steuerbar ist, wobei die Produktionsmaschine mindestens zwei Elemente mit Schnittstellen aufweist, die an den Schnittstellen aneinander angeschlossen sind.

Derartige Steuereinrichtungen sind allgemein bekannt. Beispiele derartiger Steuereinrichtungen sind speicherprogrammierbare Steuerungen und numerische Steuerungen.

Die Elemente der korrespondierenden Produktionsmaschine können beispielsweise mechanische, elektrische, elektronische oder datentechnische Elemente sein. Beispiele mechanischer Elemente sind eine Gewindespindel oder ein Untersetzungsgetriebe. Beispiele elektrischer Elemente sind Antriebe oder ein motorisch betätigbarer Werkzeughalter. Beispiele elektronischer Elemente sind Sensoren oder dezentrale Peripherieeinheiten. Beispiele datentechnischer Elemente sind Softwaremodule oder Kommunikationsprogramme. In jedem Fall handelt es sich bei den Elementen der vorliegenden Erfindung um Einheiten, die bei der Projektierung der Produktionsmaschine einzeln projektiert werden.

Die Schnittstellen der korrespondierenden Produktionsmaschinen sind vielfältiger Natur. Sie umfassen mechanische Schnittstellen, elektrische Schnittstellen, datentechnische Schnittstellen und noch mehr.

Für einen ordnungsgemäßen Betrieb der Produktionsmaschine ist erforderlich, dass diese korrekt projektiert wurde. Das Projektieren erfolgt in der Regel über Modellierprogramme, mittels derer die Produktionsmaschine modellierbar ist. Die Modellierprogramme laufen auf Rechnern ab, die keine Steuereinrichtungen für Produktionsmaschinen sind, sondern handelsübliche PCs.

Die Modellierprogramme umfassen Elementbeschreibungen möglicher Elemente, wobei die Elementbeschreibungen jeweils zumindest eine Liste der vorhandenen Schnittstellen umfassen, so dass ermittelbar ist, welche Elemente aneinander anschließbar sind. Mittels der Modellierprogramme wird eine Sollausbaubeschreibung erstellt, welche umfasst, welche Elemente die Produktionsmaschine aufweist und über welche Schnittstellen die Elemente aneinander angeschlossen sind. Die Sollausbaubeschreibung ist von einem Bediener des Modellierprogramms erstellbar und änderbar. Eine bereits erstellte Sollausbaubeschreibung ist ferner abrufbar. Die erstellte Sollausbaubeschreibung ist in der Steuereinrichtung der Produktionsmaschine hinterlegbar. Die Steuereinrichtung weist eine Bedienerschnittstelle auf, über die die Sollausbaubeschreibung an den Bediener ausgebbar ist.

Produktionsmaschinen werden von Zeit zu Zeit umgerüstet. Ein Beispiel einer derartigen Umrüstung ist der Anbau eines weiteren Elements, der Abbau eines bisher vorhandenen Elements, der Austausch von Elementen oder auch die Umrüstung auf eine neue Betriebsart. Um in der Steuereinrichtung stets den aktuellen Ausbaustand der Produktionsmaschine vorzuhalten, ist es im Stand der Technik daher erforderlich, die Änderung des Ausbaus mittels des Rechners und des Modellierprogramms nachzuvollziehen und die neue Sollausbaubeschreibung in der Steuereinrichtung zu hinterlegen.

Aus der EP 0 747 793 A2 ist eine modular aufgebaute Druckmaschine bekannt, die eine Steuereinrichtung aufweist. In den einzelnen Modulen der Druckmaschine ist jeweils eine Beschreibung des jeweiligen Moduls hinterlegt. Die Module "melden" sich bei der Steuereinrichtung. Diese ist so in der Lage, den Istausbau der Druckmaschine zu ermitteln und die Druckmaschine in Abstimmung mit dem ermittelten Istausbau zu betreiben.

Aus der EP 1 225 491 A1 ist eine Steuereinrichtung für eine Verpackungsmaschine bekannt. In der Steuereinrichtung sind Anweisungen für einen Bediener der Verpackungsmaschine gespeichert. Die Anweisungen können vom Bediener abgerufen werden. Sie geben an, welche Maßnahmen der Bediener in welcher Reihenfolge vornehmen muss, um die Verpackungsmaschine von einer ersten Betriebsweise zu einer zweiten Betriebsweise umzurüsten.

Aus der DE 199 17 102 A1 ist eine Projektierungs- und Diagnoseeinrichtung für eine elektrische Anlage bekannt. Die Einrichtung kann einen Reservoirbereich aufweisen, in dem Elementbeschreibungen möglicher Elemente der elektrischen Anlage hinterlegt sind. Jede Elementbeschreibung kann hierbei eine Liste der vorhandenen Schnittstellen umfassen. Dadurch ist von der Projektierungs- und Diagnoseeinrichtung ermittelbar, welche Elemente aneinander anschließbar sind. Die Projektierungs- und Diagnoseeinrichtung kann weiterhin einen Konfigurationsbereich aufweisen, in dem eine Sollausbaubeschreibung hinterlegt ist. Die Sollausbaubeschreibung umfasst zumindest, welche Elemente die elektrische Anlage aufweist und über welche Schnittstellen die Elemente aneinander angeschlossen sind. Die Projektierungs- und Diagnoseeinrichtung weist weiterhin eine Bedienerschnittstelle auf, über die die Sollausbaubeschreibung von einem Bediener der Projektierungs- und Diagnoseeinrichtung anforderbar, auf Grund der Anforderung an den Bediener ausgebbar und von dem Bediener änderbar ist.

Die Aufgabe der vorliegenden Erfindung besteht darin, eine Steuereinrichtung derart weiter zu entwickeln, dass die Sollausbaubeschreibung auf einfachere Weise als im Stand der Technik aktualisierbar ist.

Die Aufgabe wird, ausgehend von einer Steuereinrichtung der eingangs genannten Art, dadurch gelöst, dass die Steuereinrichtung einen Reservoirbereich aufweist, in dem Elementbeschreibungen möglicher Elemente hinterlegt sind, dass die Elementbeschreibungen jeweils zumindest eine Liste der vorhandenen Schnittstellen umfassen, so dass von der Steuereinrichtung ermittelbar ist, welche Elemente aneinander anschließbar sind, und dass die Steuereinrichtung eine Bedienerschnittstelle aufweist, über die die Sollausbaubeschreibung von einem Bediener der Produktionsmaschine anforderbar, auf Grund der Anforderung an den Bediener ausgebbar und von dem Bediener änderbar ist.

Vorzugsweise sind im Reservoirbereich auch Montage- und/oder Demontageinformationen darüber hinterlegt, wie die möglichen Elemente über die Schnittstellen aneinander anzuschließen und voneinander zu trennen sind. Denn dann ist es möglich, das über die Bedienerschnittstelle auch die Montage- bzw. Demontageinformationen von dem Bediener anforderbar und an den Bediener ausgebbar sind.

Weiterhin sind vorzugsweise im Reservoirbereich Inbetriebsetzungsinformationen darüber hinterlegt, wie die möglichen Elemente in Betrieb zu setzen sind. Denn dann ist es möglich, dass auch die Inbetriebsetzungsinformationen über die Bedienerschnittstelle von dem Bediener anforderbar und an den Bediener ausgebbär sind.

In einer vorteilhaften Ausgestaltung weist die Sollausbaubeschreibung Parametrisierungen der vorhandenen Elemente auf. Auch die Parametrisierungen sind über die Bedienerschnittstelle an den Bediener ausgebbar und von dem Bediener änderbar.

In einer bevorzugten Ausgestaltung der erfindungsgemäßen Steuereinrichtung ist die von dem Bediener geänderte Sollausbaubeschreibung im Konfigurationsbereich alternativ oder zusätzlich zur ursprünglichen Sollausbaubeschreibung hinterlegbar. Denn insbesondere ist durch das Hinterlegen alternativ zur ursprünglichen Sollausbaubeschreibung ein Überschreiben eines überholten Ausbaus möglich. Durch das Hinterlegen zusätzlich zur ursprünglichen Sollausbaubeschreibung wird die Möglichkeit eröffnet, mehrere häufiger benötigte Sollausbaubeschreibungen simultan in der Steuereinrichtung zu halten. In diesem Fall sollte in der Steuereinrichtung selbstverständlich vermerkt sein, welches die momentan gültige Sollausbaubeschreibung ist.

Vorzugsweise ist der Steuereinrichtung von dem Bediener eine Selektion einer der Schnittstellen eines bestimmten Elements vorgebbar. In diesem Fall sind die Elementbeschreibungen der an die selektierte Schnittstellen anschließbaren möglichen Elemente vorzugsweise über die Bedienerschnittstelle an den Bediener ausgebbar. Auf Grund dieser Ausgestaltung ist insbesondere eine Benutzerführung beim Projektieren der Produktionsmaschine möglich.

Die Projektierung der Produktionsmaschine wird noch weiter erleichtert, wenn von der Steuereinrichtung beim Ermitteln der an die selektierte Schnittstelle anschließbaren möglichen Elemente zusätzlich berücksichtigt wird, welche Elemente an die anderen Schnittstellen des bestimmten Elements gangeschlossen sind. Dadurch können beispielsweise gegenseitige Beeinflussungen und Inkompatibilitäten berücksichtigt werden.

In einer bevorzugten Ausgestaltung der vorliegenden Erfindung ist die Sollausbaubeschreibung dadurch gebildet, dass sie für jedes vorhandene Element eine Instanziierung einer der Elementbeschreibungen enthält. Dadurch ist die Erstellung den Sollausbaubeschreibung besonders einfach.

Vorzugsweise werden von der Steuereinrichtung während des Steuerns der Produktionsmaschine die vorhandenen Elemente auf ordnungsgemäßes Funktionieren überwacht und wird im Falle einer Fehlfunktion eines der vorhandenen Elemente über die Bedienerschnittstelle eine Meldung an den Bediener ausgegeben. Anhand der Meldung ist von dem Bediener erkennbar, an welchem der Elemente die Fehlfunktion aufgetreten ist.

Die Erkennbarkeit des Fehlerortes ist für den Bediener besonders einfach, wenn die von der Steuereinrichtung ausgebbare Meldung eine Projektionsdarstellung der Projektionsmaschine umfasst, in der optisch hervorgehoben ist, an welchem der Elemente die Fehlfunktion aufgetreten ist.

Es ist möglich, dass von der Steuereinrichtung ein tatsächlicher Ausbau der Produktionsmaschine ermittelbar ist. In diesem Fall kann beispielsweise von der Steuereinrichtung der tatsächliche Ausbau selbsttätig in der Steuereinrichtung als Istausbau hinterlegt werden.

Der Istausbau ist über die Bedienerschnittstelle vom Bediener anforderbar und auf Grund der Anforderung an den Bediener ausgebbar.

Der Istausbau weist vorzugsweise einen Konfigurationsteil und einen Elementteil auf, wobei der Konfigurationsteil in seinem Format einer Sollausbaubeschreibüng entspricht und der Elementteil dynamische Daten der Elemente der Produktionsmaschine enthält.

Der Konfigurationsteil ist vorzugsweise vom Bediener nicht änderbar. Er kann als Sollausbaubeschreibung übernehmbar sein. Die übernommene Sollausbaubeschreibung ist dann wieder änderbar.

Der Elementteil kann vom Bediener zumindest teilweise änderbar sein.

Vorzugsweise aktualisiert die Steuereinrichtung den Istausbau während des Betriebs der Produktionsmaschine.

Weitere Vorteile und Einzelheiten ergeben sich aus der nachfolgenden Beschreibung von Ausführungsbeispielen in Verbindung mit den Zeichnungen. Dabei zeigen in Prinzipdarstellung:
FIG 1 beispielhaft ein Blockschaltbild einer Produktionsmaschine,
FIG 2 ein Blockschaltbild einer Steuereinrichtung für die Produktionsmaschine von FIG 1 und
FIG 3 bis 6 Ablaufdiagramme.

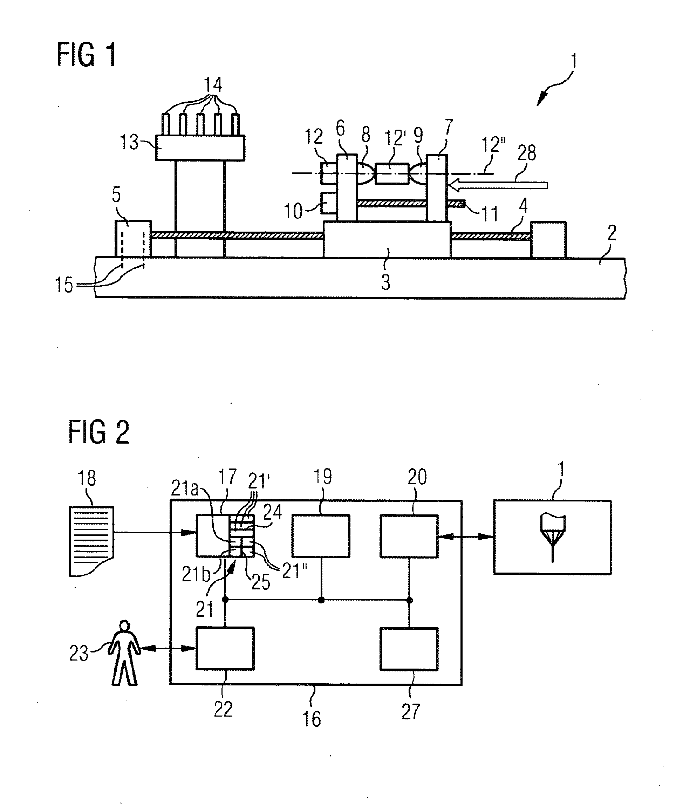

In FIG 1 ist - rein beispielhaft - eine Produktionsmaschine 1 dargestellt. Die Produktionsmaschine 1 weist verschiedene Elemente 2 bis 14 auf. Beispielhaft dargestellt sind in FIG 1
- ein Grundkörper 2,
- ein Werkstückschlitten 3, der mittels einer Schlittenspindel 4 und eines Schlittenantriebs 5 verfahrbar ist,
- ein erster und ein zweiter Werkstückhalter 6, 7, die jeweils ein Spannfutter 8, 9 aufweisen und mittels eines Halterantriebs 10 und einer Halterspindel 11 relativ zueinander verfahrbar sind,
- ein Werkstückantrieb 12, mittels dessen ein Werkstück 12' um eine Drehachse 12" rotierbar ist, und
- ein Werkzeugmagazin 13, das eine Anzahl von Werkzeugen 14 enthält.

Die Elemente 2 bis 14 sind über Schnittstellen mechanisch miteinander verbunden. Beispielsweise ist der Schlittenantrieb 5 über schematisch angedeutete Schraubbolzen 15 mit dem Grundkörper 2 verbunden. Die zugehörigen Bolzenführungen des Grundkörpers 2 und des Schlittenantriebs 5 stellen somit einen Teil der mechanischen Schnittstelle zwischen dem Grundkörper 2 und dem Schlittenantrieb 5 dar. Weiterhin ist der Schlittenantrieb 5 über entsprechende Verbindungselemente mit der Schlittenspindel 4 verbunden. Auch diese Verbindung stellt eine mechanische Schnittstelle dar, hier zwischen der Schlittenspindel 4 und dem Schlittenantrieb 5. Ähnliche Ausführungen gelten für die anderen der Elemente 2 bis 14. So muss beispielsweise der Werkstückschlitten 3 an den Durchmesser und die Gewindesteigung der Schlittenspindel 4 angepasst sein.

Weiterhin sind auch elektrische Schnittstellen gegeben, insbesondere Anschlüsse für Energie-, Signal- und Kommunikationsleitungen. Auch diese Schnittstellen müssen geeignet miteinander verbunden sein. Beispielsweise kann eine elektrische Schnittstelle Schraubklemmen zum Anschließen einzelner Leiter oder eine ein- oder mehrpolige vorkonfektionierte Steckverbindung aufweisen. Auch datentechnische Schnittstellen müssen beachtet werden. In Frage kommen beispielsweise Datenübertragungsrate, Protokoll, Signalart usw..

Die Produktionsmaschine 1 wird gemäß FIG 2 von einer Steuereinrichtung 16 gesteuert. Die Steuereinrichtung 16 weist hierzu einen Speicher 17 auf, in dem unter anderem ein Steuerprogramm 18 hinterlegt ist. Das Steuerprogramm 18 wird von einem Prozessor 19 der Steuereinrichtung 16 ausgelesen und abgearbeitet. Entsprechend dem Steuerprogramm 18 steuert der Prozessor 19 über eine Maschinenschnittstelle 20 die Produktionsmaschine 1.

In dem Speicher 17 können ein Istausbau 21 und Beschreibungen 21', 21" hinterlegt sein. Der Istausbau 21 und die Beschreibungen 21', 21" sind über eine Bedienerschnittstelle 22 an einen Bediener 23 der Produktionsmaschine 1 ausgebbar, teilweise auch abrufbar und änderbar. Die Bedienerschnittstelle 22 umfasst hierzu vorzugsweise eine Sichteinheit (Display) und eine Eingabeeinrichtung (beispielsweise Tastatur und/oder Cursorsteuerung).

Gemäß FIG 2 sind die Beschreibungen 21' in einem Reservoirbereich 24 des Speichers 17 gespeichert, die Beschreibungen 21" in einem Konfigurationsbereich 25 des Speichers 17.

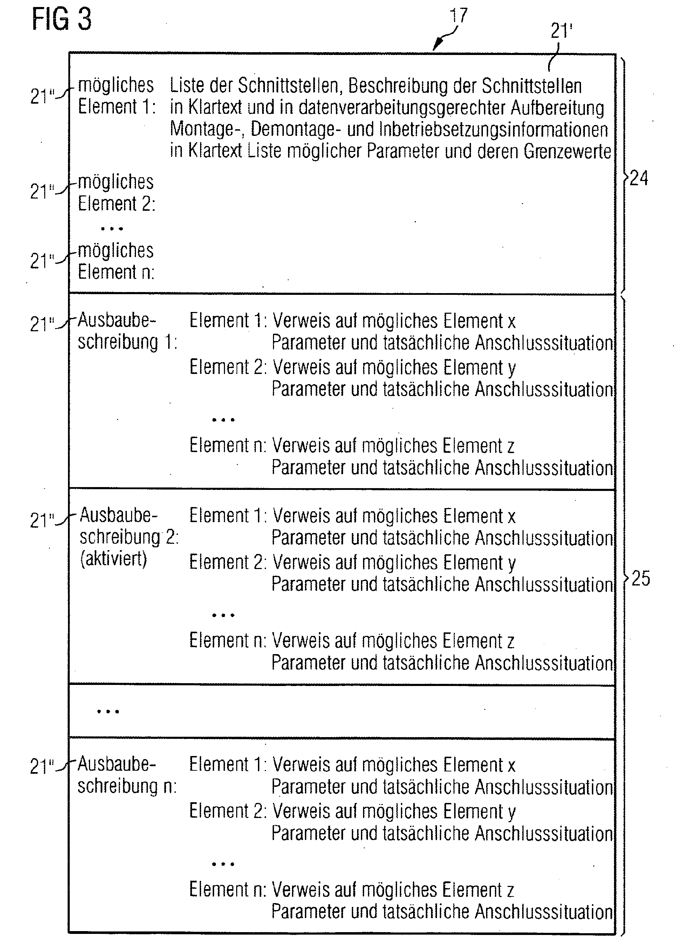

Die in der Steuereinrichtung 16 hinterlegten Beschreibungen 21', 21" werden nachfolgend in Verbindung mit FIG 3 näher erläutert.

Die Beschreibungen 21' sind Elementbeschreibungen 21'. Sie beschreiben gemäß FIG 3 jeweils ein mögliches Element 26 der Produktionsmaschine 1. Die Elementbeschreibungen 21' weisen - spezifisch für das jeweilige mögliche Element 26 - folgenden Inhalt auf:
- Eine Liste der vorhandenen Schnittstellen des jeweiligen möglichen Elements 26 und eine Beschreibung dieser Schnittstellen. Die Beschreibungen enthalten zum Einen einen Klartextteil, der über die Bedienerschnittstelle 22 an den Bediener 23 ausgebbar ist, zum Anderen einen datenverarbeitungsgerecht aufbereiteten Teil, der von der Steuereinrichtung 16 intern verwendet wird, um zu ermitteln, welche anderen möglichen Elemente 26 mit welcher ihrer Schnittstellen an die jeweilige Schnittstelle dieses möglichen Elements 26 anschließbar sind.
- Montageinformationen darüber, wie das jeweilige mögliche Element 26 über seine Schnittstelle an andere mögliche Elemente 26 anzuschließen ist.
- Demontageinformationen darüber, wie das jeweilige mögliche Element 26 von anderen möglichen Elementen zu trennen ist.
- Inbetriebsetzungsinformationen darüber, wie das jeweilige mögliche Element 26 in Betrieb zu setzen ist.
- Eine Liste möglicher Parameter und der maximal bzw. minimal zulässigen Grenzwerte für diese Parameter.

Die Montage-, Demontage- und Inbetriebsetzungsinformation ist in Klartext hinterlegt, beispielsweise in ASCII-Code, und über die Bedienerschnittstelle 22 an den Bediener 23 ausgebbar.

Die im Reservoirbereich 24 abgespeicherten Beschreibungen 21' können vom Bediener 23 änderbar sein. Es ist aber auch möglich, dass sie vom Bediener 23 nicht änderbar sind.

Im Konfigurationsbereich 25 ist mindestens eine Sollausbaubeschreibung 21" hinterlegt. Gegebenenfalls können im Konfigurationsbereich 25 auch mehrere Sollausbaubeschreibungen 21" hinterlegt sein. Wenn im Konfigurationsbereich 25 mehr als eine Sollausbaubeschreibung 21" hinterlegt ist, sollte mit vermerkt sein, welche der Sollausbaubeschreibungen 21" momentan gültig (= aktiviert) ist.

Die Sollausbaubeschreibungen 21" sind über die Bedienerschnittstelle 22 vom Bediener 23 anforderbar. Wenn der Bediener 23 eine derartige Anforderung eingibt, wird die angeforderte Sollausbaubeschreibung 21" von der Steuereinrichtung 16 über die Bedienerschnittstelle 22 an den Bediener 23 ausgegeben. Sie kann danach von dem Bediener 23 geändert werden.

Gemäß FIG 3 umfasst jede Sollausbaubeschreibung 21" für jedes Element 2 bis 14, das die Produktionsmaschine 1 gemäß der jeweiligen Sollausbaubeschreibung 21" aufweist, eine Instanziierung einer der Elementbeschreibungen 21', die im Reservoirbereich 24 hinterlegt sind. Die Instanziierungen sind parametriert. Es sind also die möglichen Parameter des jeweiligen Elements 2 bis 14 mit konkreten Werten belegt. Ferner sind den jeweiligen Instanziierungen selbstverständlich die Informationen zugeordnet, welche andere Elemente 2 bis 14 an das jeweilige instanziierte Element 2 bis 14 angeschlossen sind. Die Sollausbaubeschreibung 21" umfasst somit, welche Elemente 2 bis 14 die Produktionsmaschine 1 aufweist und über welche Schnittstellen die Elemente 2 bis 14 aneinander angeschlossen sind.

Auch der Istausbau 21 kann im Konfigurationsbereich 25 hinterlegt sein. Er ist über die Bedienerschnittstelle 22 vom Bediener 23 anforderbar. Er wird im Falle einer Anforderung über die Bedienerschnittstelle 22 an den Bediener 23 ausgegeben.

Der Istausbau 21 enthält einen Konfigurationsteil 21a und einen Elementteil 21b. Sowohl der Konfigurationsteil 21a als auch der Elementteil 21b sind vom Bediener 23 anforderbar.

Der Konfigurationsteil 21a entspricht in seinem Format einer Sollausbaubeschreibung 21". Er kann vom Bediener 23 als Sollausbaubeschreibung 21" übernommen werden. Ein Ändern des Konfigurationsteils 21a ist dem Bediener 23 aber nicht möglich. Änderungen kann er erst vornehmen, wenn er den Konfigurationsteil 21a als Sollausbaubeschreibung 21" übernommen hat.

Der Elementteil 21b enthält dynamische Daten der Elemente 2 bis 14 der Produktionsmaschine 1. Beispielsweise enthält der Elementteil 21b die Laufzeiten, den Zeitpunkt der letzten Wartung oder Inspektion, den Verschleißzustand usw. der Elemente 2 bis 14 der Produktionsmaschine 1. Der Elementteil 21b kann - zumindest teilweise - vom Bediener 23 änderbar sein.

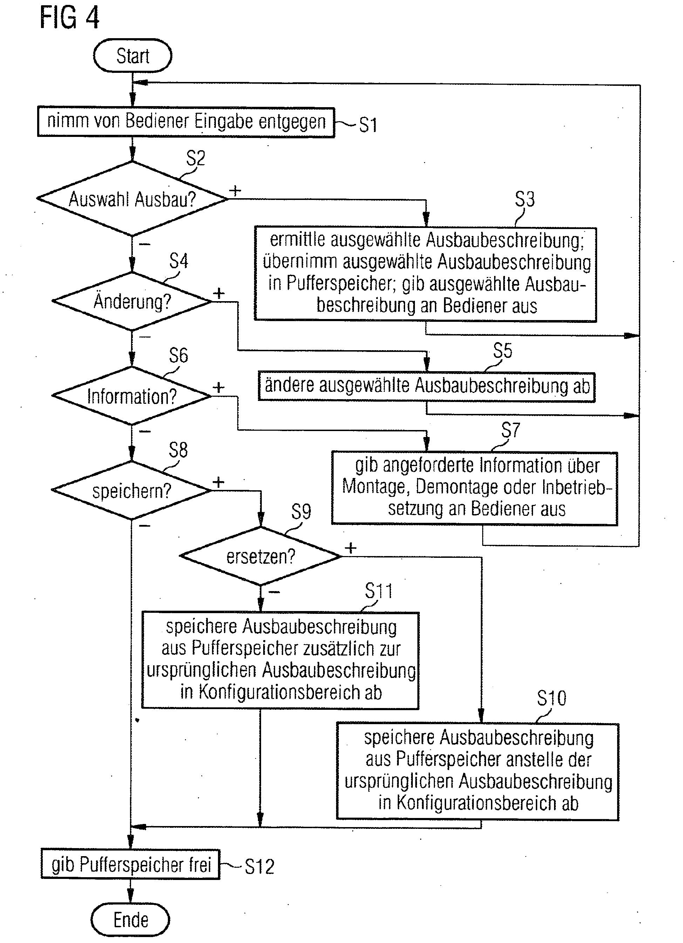

In Verbindung mit FIG 4 wird nunmehr die Interaktion der Steuereinrichtung 16 mit dem Bediener 23 beschrieben, soweit es die in der Steuereinrichtung 16 hinterlegten Beschreibungen 21', 21" betrifft.

Gemäß FIG 4 nimmt die Steuereinrichtung 16 in einem Schritt S1 über die Bedienerschnittstelle 22 vom Bediener 23 eine Eingabe entgegen. In einem Schritt S2 prüft die Steuereinrichtung 16, ob die Bedienereingabe eine Auswahl einer Sollausbaubeschreibung 21" ist. Wenn dies der Fall ist, ermittelt die Steuereinrichtung 16 in einem Schritt S3, welche Sollausbaubeschreibung 21" der Bediener 23 ausgewählt hat. Ferner übernimmt die Steuereinrichtung 16 die ausgewählte Sollausbaubeschreibung 21" in einen Pufferspeicher 27 und gibt sie über die Bedienerschnittstelle 22 an den Bediener 23 aus.

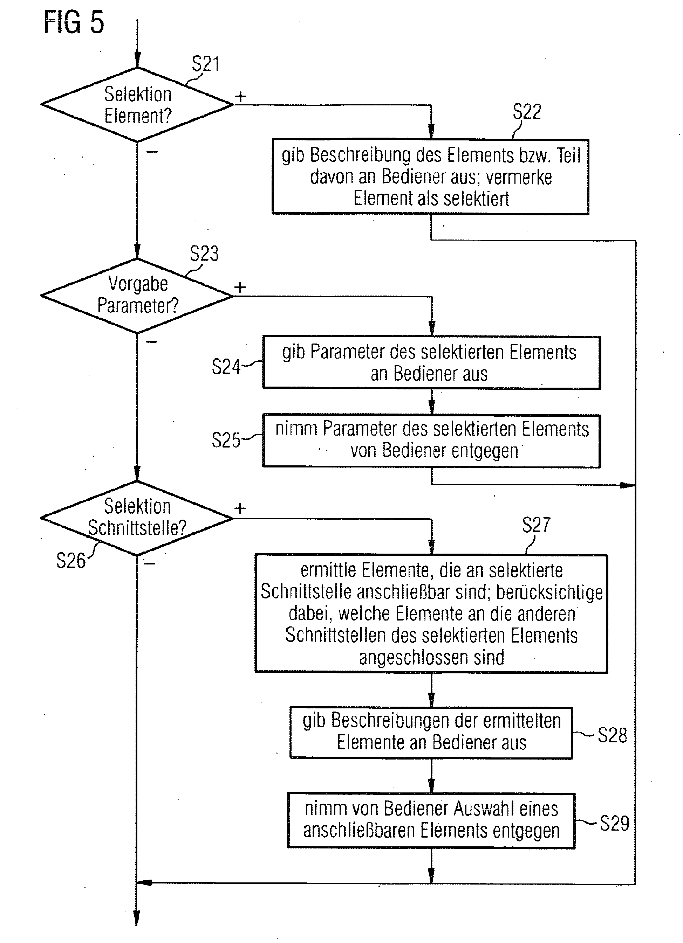

Wenn die Eingabe des Schrittes S1 keine Auswahl einer Sollausbaubeschreibung 21" ist, prüft die Steuereinrichtung 16 in einem Schritt S4, ob die Eingabe des Schrittes S1 eine Änderungsvorgabe für die ausgewählte Sollausbaubeschreibung 21" ist. Wenn dies der Fall ist, ändert die Steuereinrichtung 16 in einem Schritt S5 die ausgewählte Sollausbaubeschreibung 21" entsprechend der Änderungsvorgabe ab. Die Änderung wird aber nur bezüglich der im Pufferspeicher 27 gespeicherten Sollausbaubeschreibung 21" durchgeführt. Die im Konfigurationsbereich 25 hinterlegten Sollausbaubeschreibungen 21" werden nicht geändert. Auf den Schritt S5 wird später in Verbindung mit FIG 5 noch näher eingegangen werden.

Wenn die Eingabe des Schrittes S1 auch nicht eine ÄnderungsVorgabe ist, prüft die Steuereinrichtung 16 in einem Schritt S6, ob die Eingabe eine Anforderung zum Ausgeben einer Information über die Montage, Demontage oder Inbetriebsetzung eines Elements 2 bis 14 ist. Wenn dies der Fall ist, gibt die Steuereinrichtung 16 in einem Schritt S7 die angeforderte Information über Bedienerschnittstelle 22 an den Bediener 23 aus.

Wenn die Eingabe des Schrittes S1 auch nicht eine Informationsanforderun*g ist, prüft die Steuereinrichtung 16 in einem Schritt S8, ob vorherige Eingaben gespeichert werden sollen. Wenn dies der Fall ist, prüft die Steuereinrichtung 16 in einem Schritt S9 weiterhin, ob die im Pufferspeicher 27 gespeicherte Sollausbaubeschreibung 21" die korrespondierende ursprüngliche Sollausbaubeschreibung 21", die im Konfigurationsbereich 25 hinterlegt ist, ersetzen soll. Wenn dies der Fall ist, speichert die Steuereinrichtung 16 in einem Schritt S10 die im Pufferspeicher 27 zwischengespeicherte Sollausbaubeschreibung 21" anstelle der ursprünglichen Sollausbaubeschreibung 21" im Konfigurationsbereich 25 ab. Anderenfalls führt die Steuereinrichtung 16 einen Schritt S11 aus, in dem sie die im Pufferspeicher 27 zwischengespeicherte Sollausbaubeschreibung 21" zusätzlich zu der bereits im Konfigurationsbereich 25 hinterlegten Sollausbaubeschreibung 21" abspeichert. Die Steuereinrichtung 16 ist somit in der Lage, die von dem Bediener 23 geänderte Sollausbaubeschreibung 21" in der Steuereinrichtung 16 alternativ oder zusätzlich zur ursprünglichen Sollausbaubeschreibung 21" zu hinterlegen.

Ferner führt die Steuereinrichtung 16 sodann einen Schritt S12 aus. Im Schritt S12 gibt die Steuereinrichtung 16 den Pufferspeicher 27 frei, soweit dort zuvor die Sollausbaubeschreibung 21" gespeichert war. Der Schritt S12 wird auch ausgeführt, wenn kein Speichern im Konfigurationsbereich 25 erfolgen soll.

Gemäß FIG 5 kann der Schritt S5 von FIG 4 beispielsweise wie folgt implementiert sein:

In einem Schritt S21 prüft die Steuereinrichtung 16, ob die Änderungsvorgabe des Benutzers 23 eine Selektionseingabe für eines der Elemente 2 bis 14 ist. Wenn dies der Fall ist, gibt die Steuereinrichtung 16 in einem Schritt S22 die Beschreibung des jeweiligen Elements 2 bis 14 oder zumindest einen Teil dieser Beschreibung über die Bedienerschnittstelle 22 an den Bediener 23 aus. Weiterhin vermerkt die Steuereinrichtung 16 intern dieses Element 2 bis 14 als selektiert.

Wenn die Änderungsvorgabe keine Selektion eines Elements 2 bis 14 ist, prüft die Steuereinrichtung 16 in einem Schritt 23, ob die Eingabe eine Vorgabe zur Änderung eines Parameters war. Wenn dies der Fall ist, gibt die Steuereinrichtung 16 in einem Schritt S24 die Parameter des selektierten Elements 2 bis 14 über die Bedienerschnittstelle 22 an den Bediener 23 aus. In einem Schritt S25 nimmt sie entsprechende Parametervorgaben entgegen.

Wenn die Änderungsvorgabe des Schrittes S1 weder die Selektion eines Elements 2 bis 14 noch die Vorgabe eines Parameters war, prüft die Steuereinrichtung 16 in einem Schritt S26, ob der Bediener 23 eine der Schnittstellen des zuvor selektierten Elements 2 bis 14 selektiert hat. Wenn dies der Fall ist, ermittelt die Steuereinrichtung 16 anhand der Beschreibung der selektierten Schnittstelle und der Beschreibungen der Schnittstellen der möglichen Elemente 26, welche möglichen Elemente 26 an die selektierte Schnittstelle anschließbar sind. Beim Ermitteln der an die selektierte Schnittstelle anschließbaren möglichen Elemente 26 berücksichtigt die Steuereinrichtung 16 vorzugsweise, welche Elemente 2 bis 14 an die anderen Schnittstellen des bestimmten Elements 2 bis 14 bereits angeschlossen sind.

In einem Schritt S28 gibt die Steuereinrichtung 16 die Beschreibungen 21' der im Schritt S27 ermittelten möglichen Elemente 26 (bzw. einen Teil der Beschreibungen) über die Bedienerschnittstelle 22 an den Bediener 23 aus. In einem Schritt S29 nimmt die Steuereinrichtung 16 schließlich eine entsprechende Auswahl eines der möglichen Elemente 26 vom Bediener 23 entgegen.

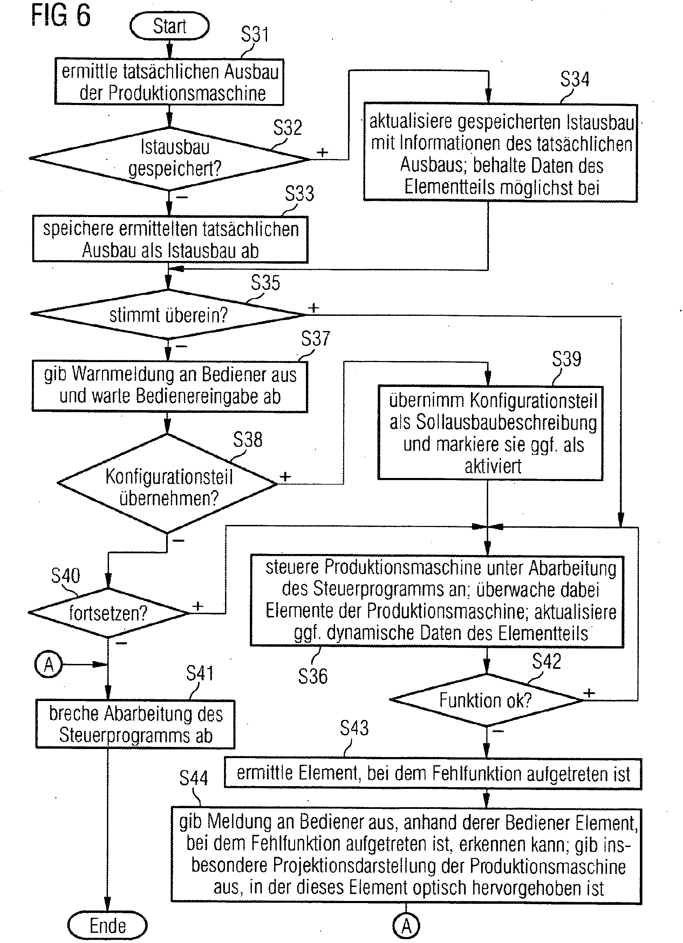

Im Betrieb der Produktionsmaschine 1 ermittelt die Steuereinrichtung 16 gemäß FIG 6 in einem Schritt S31 vorzugsweise zunächst den tatsächlichen Ausbau der Produktionsmaschine 1, soweit dies für die Steuereinrichtung 16 möglich ist.

Sie prüft sodann in einem Schritt S32, ob im Konfigurationsbereich 25 bereits ein Istausbau 21 gespeichert ist. Ist im Konfigurationsbereich 25 noch kein Istausbau 21 gespeichert, speichert die Steuereinrichtung 16 den soeben ermittelten tatsächlichen Ausbau in einem Schritt S33 selbsttätig als Istausbau 21 ab. Hierbei werden sowohl der Konfigurationsteil 21a als auch der Elementteil 21b abgespeichert. Wenn im Konfigurationsbereich 25 bereits ein Istausbau 21 gespeichert ist, wird der gespeicherte Istausbau 21 in einem Schritt S34 mit den Informationen des tatsächlichen Ausbaus aktualisiert. Beim Aktualisieren des Istausbaus 21 werden der Konfigurationsteil 21a überschrieben und Daten des Elementteils 21b beibehalten, soweit dies sinnvoll und möglich ist.

In einem Schritt S35 prüft die Steuereinrichtung 16, ob der im Schritt S31 ermittelte tatsächliche Ausbau der Produktionsmaschine 1 mit dem Ausbau der Produktionsmaschine 1 gemäß der Sollausbaubeschreibung 21" (bzw. bei mehreren Sollausbaubeschreibungen 21" mit dem Ausbau gemäß der aktivierten Sollausbaubeschreibung 21") übereinstimmt. Wenn der tatsächliche Ausbau (also der Konfigurationsteil 21a) mit der Sollausbaubeschreibung 21" übereinstimmt, verzweigt die Steuereinrichtung 16 zu einem Schritt S36. Wenn sich hingegen Abweichungen ergeben, gibt die Steuereinrichtung 16 in einem Schritt S37 über die Bedienerschnittstelle 22 eine Warnmeldung an den Bediener 23 aus und wartet eine Eingabe des Bedieners 23 ab.

In einem Schritt S38 prüft die Steuereinrichtung 16, ob die Bedienereingabe des Schrittes S37 ein Befehl zum Übernehmen des Konfigurationsteils 21a als neue Sollausbaubeschreibung 21" ist. Wenn dies der Fall ist, übernimmt die Steuereinrichtung 16 in einem Schritt S39 den Konfigurationsteil 21a als Sollausbaubeschreibung 21", markiert gegebenenfalls diese neue Sollausbaubeschreibung 21" als aktiviert und geht zum Schritt S36 über. Je nach Art der Bedienereingabe kann die neue Sollausbaubeschreibung 21" die vorherige Sollausbaubeschreibung 21" verdrängen oder zusätzlich zu der bisher gespeicherten Sollausbaubeschreibung 21" im Konfigurationsbereich 25 abgespeichert werden.

Wenn die Bedienereingabe des Schrittes S37 kein Befehl zum Übernehmen des Konfigurationsteils 21a ist, prüft die Steuereinrichtung 16 in einem Schritt S40, ob die Bedienereingabe ein Befehl zum Fortsetzen des Steuerns der Produktionsmaschine 1 ist. Wenn dies nicht der Fall ist, wird die weitere Abarbeitung des Steuerprogramms 18 in einem Schritt S41 abgebrochen.

Wenn zum Schritt S36 verzweigt wurde, steuert die Steuereinrichtung 16 die Produktionsmaschine 1 unter Abarbeitung des Steuerprogramms 18 an. Ebenfalls im Rahmen des Schrittes S36 überwacht die Steuereinrichtung 16 die Elemente 2 bis 14 der Produktionsmaschine 1 auf ordnungsgemäßes Funktionieren. Soweit sinnvoll und möglich, kann die Steuereinrichtung 16 im Rahmen des Schrittes S36 auch die dynamischen Daten des Elementteils 21b aktualisieren.

In einem Schritt S42 prüft die Steuereinrichtung 16, ob die Elemente 2 bis 14 ordnungsgemäß funktionieren. Wenn dies der Fall ist, geht die Steuereinrichtung 16 zum Schritt S36 zurück. Anderenfalls ermittelt die Steuereinrichtung 16 in einem Schritt S43, an welchem der Elemente 2 bis 14 die Fehlfunktion aufgetreten ist. In einem Schritt S44 gibt sie über die Bedienerschnittstelle 22 eine Meldung an den Bediener 23 aus, anhand derer der Bediener 23 erkennen kann, an welchem der Elemente 2 bis 14 die Fehlfunktion aufgetreten ist.

Die Meldung kann insbesondere eine Projektionsdarstellung der Produktionsmaschine 1 umfassen - z. B. eine Darstellung ähnlich zu der von FIG 1 -, in der optisch hervorgehoben ist, an welchem der Elemente 2 bis 14 die Fehlfunktion aufgetreten ist. Die optische Hervorhebung kann beispielsweise darin bestehen, dass das Element 2 bis 14, bei dem die Fehlfunktion aufgetreten ist, blinkend und/oder in einer anderen Farbe als die übrigen Elemente 2 bis 14 dargestellt wird. Auch kann das fehlerhafte Element 2 bis 14 beispielsweise mittels eines Pfeils 28 (siehe FIG 1) markiert sein. Auch eine Kombination verschiedener Maßnahmen ist möglich.

Mittels der erfindungsgemäß ausgestalteten Steuereinrichtung 16 ist somit eine komfortable Konfigurierung und Rekonfigurierung der Sollausbaubeschreibung 21" vor Ort, also an der Produktionsmaschine 1, möglich.

## Patentansprüche

1. Steuereinrichtung,
- wobei von der Steuereinrichtung eine Produktionsmaschine (1) entsprechend einem in der Steuereinrichtung hinterlegten Steuerprogramm (18) steuerbar ist,
- wobei die Produktionsmaschine (1) mindestens zwei Elemente (2 bis 14) mit Schnittstellen aufweist, die an den Schnittstellen aneinander angeschlossen sind,
- wobei die Steuereinrichtung einen Reservoirbereich (24) aufweist, in dem Elementbeschreibungen (21') möglicher Elemente (26') hinterlegt sind,
- wobei jede Elementbeschreibung (21') zumindest eine Liste der vorhandenen Schnittstellen des jeweiligen Elements (26) umfasst, so dass von der Steuereinrichtung ermittelbar ist, welche Elemente (26) aneinander anschließbar sind,
- wobei die Steuereinrichtung einen Konfigurationsbereich (25) aufweist, in dem eine Sollausbaubeschreibung (21") hinterlegt ist,
- wobei die Sollausbaubeschreibung (21") zumindest umfasst, welche Elemente (2 bis 14) die Produktionsmaschine (1) aufweist und über welche Schnittstellen die Elemente (2 bis 14) aneinander angeschlossen sind,
- wobei die Steuereinrichtung eine Bedienerschnittstelle (22) aufweist, über die die Sollausbaubeschreibung (21") von einem Bediener (23) der Produktionsmaschine (1) anforderbar, auf Grund der Anforderung an den Bediener (23) ausgebbar und von dem Bediener (23) änderbar ist.

2. Steuereinrichtung nach Anspruch 1,
**dadurch gekennzeichnet,**
**dass** im Reservoirbereich (24) Montage- und/oder Demontageinformationen darüber hinterlegt sind, wie die möglichen Elemente (26) über die Schnittstellen aneinander anzuschließen und voneinander zu trennen sind, und dass auch die Montage- bzw. Demontageinformationen über die Bedienerschnittstelle (22) von dem Bediener (23) anforderbar und an den Bediener (23) ausgebbar sind.

3. Steuereinrichtung nach Anspruch 1 oder 2,
**dadurch gekennzeichnet,**
**dass** im Reservoirbereich (24) Inbetriebsetzungsinformationen darüber hinterlegt sind, wie die möglichen Elemente (26) in Betrieb zu setzen sind, und dass auch die Inbetriebsetzungsinformationen über die Bedienerschnittstelle (22) von dem Bediener (23) anforderbar und an den Bediener (23) ausgebbar sind.

4. Steuereinrichtung nach Anspruch 1, 2 oder 3,
**dadurch gekennzeichnet,**
**dass** die Sollausbaubeschreibung (21") Parametrisierungen der vorhandenen Elemente (2 bis 14) aufweist und dass auch die Parametrisierungen über die Bedienerschnittstelle (22) an den Bediener (23) ausgebbar und von dem Bediener (23) änderbar sind.

5. Steuereinrichtung nach einem der obigen Ansprüche,
**dadurch gekennzeichnet,**
**dass** die von dem Bediener (23) geänderte Sollausbaubeschreibung (21") im Konfigurationsbereich (25) alternativ oder zusätzlich zur ursprünglichen Sollausbaubeschreibung (21") hinterlegbar ist.

6. Steuereinrichtung nach einem der obigen Ansprüche,
**dadurch gekennzeichnet,**
**dass** der Steuereinrichtung von dem Bediener (23) eine Selektion einer der Schnittstellen eines bestimmten Elements (2 bis 14) vorgebbar ist und dass die Elementbeschreibungen (21') der an die selektierte Schnittstelle anschließbaren möglichen Elemente (26) über die Bedienerschnittstelle (22) an den Bediener (23) ausgebbar sind.

7. Steuereinrichtung nach Anspruch 6,
**dadurch gekennzeichnet,**
**dass** von der Steuereinrichtung beim Ermitteln der an die selektierte Schnittstelle anschließbaren möglichen Elemente (26) zusätzlich berücksichtigt wird, welche Elemente (2 bis 14) an die anderen Schnittstellen des bestimmten Elements (2 bis 14) angeschlossen sind.

8. Steuereinrichtung nach einem der obigen Ansprüche,
**dadurch gekennzeichnet,**
**dass** die Sollausbaubeschreibung (21") **dadurch** gebildet ist, dass sie für jedes vorhandene Element (2 bis 14) eine Instanziierung einer der Elementbeschreibungen (21') enthält.

9. Steuereinrichtung nach einem der obigen Ansprüche,
**dadurch gekennzeichnet,**
**dass** von der Steuereinrichtung während des Steuerns der Produktionsmaschine (1) die vorhandenen Elemente (2 bis 14) auf ordnungsgemäßes Funktionieren überwacht werden und dass von der Steuereinrichtung im Falle einer Fehlfunktion eines der vorhandenen Elemente (2 bis 14) über die Bedienerschnittstelle (22) eine Meldung an den Bediener (23) ausgegeben wird, anhand derer von dem Bediener (23) erkennbar ist, an welchem der Elemente (2 bis 14) die Fehlfunktion aufgetreten ist.

10. Steuereinrichtung nach Anspruch 9,
**dadurch gekennzeichnet,**
**dass** die von der Steuereinrichtung ausgebbare Meldung eine Projektionsdarstellung der Produktionsmaschine (1) umfasst, in der optisch hervorgehoben ist, an welchem der Elemente (2 bis 14) die Fehlfunktion aufgetreten ist.

11. Steuereinrichtung nach einem der obigen Ansprüche,
**dadurch gekennzeichnet,**
**dass** von der Steuereinrichtung ein tatsächlicher Ausbau der Produktionsmaschine (1) ermittelbar ist.

12. Steuereinrichtung nach Anspruch 11,
**dadurch gekennzeichnet,**
**dass** der tatsächliche Ausbau der Produktionsmaschine (1) von der Steuereinrichtung selbsttätig in der Steuereinrichtung als Istausbau (21) der Produktionsmaschine (1) hinterlegbar ist.

## Claims

1. Control device
- wherein a production machine (1) is able to be controlled by the control device in accordance with a control program (18) stored in the control device,
- wherein the production machine (1) has at least two elements (2 to 14) with interfaces, with said elements being connected to one another at said interfaces,
- wherein the control device has a reservoir area (24), in which element descriptions (21') of possible elements (26') are stored,
- with each element description (21') including at least a list of the available interfaces of the respective element (26), so that the elements (26) able to be connected to one another are able to be determined by the control device,
- with the control device featuring a configuration area (25) in which a required configuration description (21") is stored,
- wherein the required configuration description (21") at least includes which elements (2 to 14) the production machine (1) features and via which interfaces the elements (2 to 14) are connected to one another,
- wherein the control device features an operator interface (22), via which the required configuration description (21") is able to be requested by an operator (23) of the production machine (1), output to the operator in response to the request from the operator (23) and changed by the operator (23).

2. Control device according to claim 1,
**characterised in that**
installation and dismantling information is stored in the reservoir area (24) about how the possible elements (24) are to be connected to one another and disconnected from one another via the interfaces and that the installation and dismantling information is also able to be requested via the operator interface (22) by the operator (23) and is able to be output to the operator (23).

3. Control device according to claim 1 or 2,
**characterised in that**
commissioning information is stored in the reservoir area (24) device about how the possible elements (26) are to be put into operation and that also the commissioning information can also be requested via the operator interface (22) by the operator (23) and output to the operator (22).

4. Control device according to claim 1, 2 or 3,
**characterised in that**
the required configuration description (21") features parameter settings for the available elements (2 to 14) and that the parameter settings can also be output via the operator interface (22) to the operator (23) and changed by the operator (23).

5. Control device according to one of the previous claims,
**characterised in that**
the required configuration description (21") in the configuration area (25) changed by the operator (23) is able to be stored as an alternative to or in addition to the original required configuration description (21").

6. Control device according to one of the previous claims,
**characterised in that**
a choice of one of the interfaces of a specific element (2 to 14) can be specified to the control device by the operator (23) and that the element descriptions (21') of possible elements (26) able to be connected to the chosen interface can be output via the operator interface (22) to the operator (23).

7. Control device according to claim 6,
**characterised in that**
the elements (26) that are connected to the other interfaces of the specific element (2 to 14) can be additionally taken into account by the control device in determining the possible elements (26) able to be connected to the chosen interface.

8. Control device according to one of the previous claims,
**characterised in that**
the required configuration description (21") is formed in such a way that it has an instantiation of one of the element descriptions (21') for each available element (2 to 14).

9. Control device according to one of the previous claims,
**characterised in that**
the available elements (2 to 14) are able to be monitored for correct functioning by the control device during control of the production machine (1) and that in the case of a malfunction of one of the available elements (2 to 14), a message is able to be output via the operator interface (22) to the operator (23), on the basis of which the operator (23) can identify the element (2 to 14) at which the malfunction has occurred.

10. Control device according to claim 9,
**characterised in that**
the message able to be output by the control device includes a project planning diagram of the production machine (1) in which a visual highlight indicates at which of the elements (2 to 14) the malfunction has occurred.

11. Control device according to one of the previous claims,
**characterised in that**
it is possible for the control device to determine an actual configuration of the production machine (1).

12. Control device according to claim 11,
**characterised in that**
the actual configuration of the production machine (1) of the control device is able to be stored automatically in the control device as the present configuration (21) of the production machine (1).

## Revendications

1. Dispositif de commande,
- dans lequel une machine ( 1 ) de production peut être commandée par un dispositif de commande, conformément à un programme ( 18 ) de commande mémorisé dans le dispositif de commande,
- dans lequel la machine ( 1 ) de production a au moins deux éléments ( 2 à 14 ) ayant des interfaces qui sont raccordés l'un à l'autre aux interfaces,
- dans lequel le dispositif de commande a une partie ( 24 ) de réservoir, dans laquelle des descriptions ( 21') d'éléments ( 26' ) éventuels sont mémorisées,
- dans lequel chaque description ( 21' ) d'éléments comprend au moins une liste des interfaces présentes de l'élément ( 26 ) respectif, de manière à pouvoir déterminer par le dispositif de commande les éléments ( 26 ) qui peuvent être raccordés les uns aux autres,
- dans lequel le dispositif de commande a une partie ( 25 ) de configuration, dans laquelle une description ( 21" ) de constitution de consigne est mémorisée,
- dans lequel la description ( 21" ) de constitution de consigne comprend au moins les éléments ( 2 à 14 ) que comprend la machine ( 1 ) de production et les interfaces par lesquelles les éléments ( 2 à 14 ) sont raccordés les uns aux autres,
- dans lequel le dispositif de commande a une interface ( 22 ) d'opérateur par laquelle la description ( 21" ) de constitution de consigne peut être demandée par un opérateur ( 23 ) de la machine ( 1 ) de production, être émise sur la base de la demande à l'opérateur ( 23 ) et être modifiée par l'opérateur ( 23 ).

2. Dispositif de commande suivant la revendication 1,
**caractérisé**
**en ce que** dans la partie ( 24 ) de réservoir sont mémorisées des informations de montage et/ou de démontage sur la façon dont les éléments ( 26 ) éventuels peuvent être raccordés l'un à l'autre par les interfaces et être séparés les uns des autres et en ce que les informations de montage et de démontage peuvent être demandées aussi par l'opérateur ( 23 ) par l'intermédiaire de l'interface d'opérateur et être émises vers l'opérateur ( 23 ).

3. Dispositif de commande suivant la revendication 1 ou 2,
**caractérisé**
**en ce que** dans la partie ( 24 ) de réservoir sont mémorisées des informations de mise en fonctionnement sur la façon dont les éléments ( 26 ) éventuels peuvent être mis en fonctionnement et en ce que les informations de mise en fonctionnement aussi peuvent être demandées par l'opérateur ( 23 ) par l'intermédiaire de l'interface ( 22 ) d'opérateur et être émises vers l'opérateur ( 23 ).

4. Dispositif de commande suivant la revendication 1, 2 ou 3,
**caractérisé**
**en ce que** la description ( 21" ) de constitution de consigne a des paramétrages des éléments ( 2 à 14 ) présents et en ce que les paramétrages aussi peuvent être émis vers l'opérateur ( 23 ) par l'intermédiaire de l'interface ( 22 ) d'opérateur et être modifiés par l'opérateur ( 23 ).

5. Dispositif de commande suivant l'une des revendications précédentes,
**caractérisé**
**en ce que** la description ( 21" ) de constitution de consigne modifiée par l'opérateur ( 23 ) peut être mémorisée dans la partie ( 25 ) de configuration au lieu ou en plus de la description ( 21" ) de constitution de consigne d'origine.

6. Dispositif de commande suivant l'une des revendications précédentes,
**caractérisé**
**en ce qu'**il peut être prescrit au dispositif de commande par l'opérateur ( 23 ) une sélection de l'une des interfaces d'un élément ( 2 à 14 ) déterminé et en ce que les descriptions ( 21' ) des éléments ( 26 ) éventuels pouvant être raccordées à l'interface sélectionné peuvent être émises vers l'opérateur ( 23 ) par l'intermédiaire de l'interface ( 22 ) d'opérateur.

7. Dispositif de commande suivant la revendication 6,
**caractérisé**
**en ce qu'**il est tenu compte par le dispositif de commande, lors de la détermination des éléments ( 26 ) éventuels pouvant être raccordés à l'interface sélectionné, supplémentairement des éléments ( 2 à 14 ) qui sont raccordés aux autres interfaces de l'élément ( 2 à 14 ) déterminé.

8. Dispositif de commande suivant l'une des revendications précédentes,
**caractérisé**
**en ce que** la description ( 21" ) de constitution de consigne est formée par le fait qu'elle contient, pour chaque élément ( 2 à 14 ) présent, une mise à jour de l'une des descriptions ( 21' ) d'éléments.

9. Dispositif de commande suivant l'une des revendications précédentes,
**caractérisé**
**en ce que** le bon fonctionnement des éléments ( 2 à 14 ) présents est contrôlé par le dispositif de commande pendant la commande de la machine de production et en ce qu'il est émis par le dispositif de commande, dans le cas d'un fonctionnement défectueux de l'un des éléments ( 2 à 14 ) présents, par l'intermédiaire de l'interface ( 22 ) d'opérateur un message à l'opérateur ( 23 ), message au moyen duquel l'opérateur ( 23 ) se rend compte de celui des éléments ( 2 à 14 ) où s'est produit le fonctionnement défectueux.

10. Dispositif de commande suivant la revendication 9,
**caractérisé**
**en ce que** le message pouvant être émis par le dispositif de commande comprend une représentation de projection de la machine ( 1 ) de production, dans laquelle il est souligné optiquement celui des éléments ( 2 à 14 ) où s'est produit le fonctionnement défectueux.

11. Dispositif de commande suivant l'une des revendications précédentes,
**caractérisé**
**en ce qu'**il peut être déterminé par le dispositif de commande une constitution réelle de la machine ( 1 ) de production.

12. Dispositif de commande suivant la revendication 11,
**caractérisé**
**en ce que** la constitution réelle de la machine ( 1 ) de production peut être mémorisée automatiquement dans le dispositif de commande en tant que constitution ( 21 ) réelle de la machine ( 1 ) de production.
